# EUROPÄISCHE PATENTSCHRIFT

(11) **EP 3 700 785 B1**
(45) Veröffentlichungstag und Bekanntmachung des Hinweises auf die Patenterteilung: **05.07.2023**
(21) Anmeldenummer: 18800485.7
(22) Anmeldetag: 22.10.2018
(51) Int. Cl.: B60T 8/32

(54) **BREMSANLAGE UND VERFAHREN ZUM BETRIEB EINER SOLCHEN BREMSANLAGE**
BRAKE SYSTEM AND METHOD FOR OPERATING A BRAKE SYSTEM OF THIS KIND
SYSTÈME DE FREINAGE ET PROCÉDÉ POUR FAIRE FONCTIONNER UN TEL SYSTÈME DE FREINAGE

(30) Priorität: 24.10.2017 DE 102017218999
(43) Veröffentlichungstag der Anmeldung: 02.09.2020
(73) Patentinhaber: Continental Automotive Technologies GmbH, 30165 Hannover (DE)
(72) Erfinder: GRIMM, Robert, 65719 Hofheim (DE); ZIMMERMANN, Jochen, 56357 Oberwallmenach (DE); COURTH, Christian, 60439 Frankfurt (DE); BEUSS, Jochen, 64390 Erzhausen (DE)
(74) Vertreter: Continental Corporation
(86) Internationale Anmeldenummer: PCT/EP2018/078855
(87) Internationale Veröffentlichungsnummer: WO 2019/081413

(56) Entgegenhaltungen:
- WO-A1-98/39189
- WO-A1-2015/104122
- DE-A1-102011 081 461
- DE-A1-102013 217 954
- GB-A- 2 225 397
- US-A1- 2016 009 267
- US-A1- 2016 167 632

## Beschreibung

Die Erfindung betrifft eine Bremsanlage gemäß dem Oberbegriff von Anspruch 1 und ein Verfahren zum Betreiben einer solchen Bremsanlage.

Aus der DE 10 2013 217 954 A1 ist eine Bremsanlage mit zwei elektrisch steuerbaren Druckquellen für ein Kraftfahrzeug mit vier hydraulisch betätigbaren Radbremsen bekannt. Dabei sind die Radbremsen zur Betätigung in verschiedenen Betriebsarten mit den zwei elektrisch steuerbaren Druckquellen sowie auch mit einem bremspedalbetätigbaren Hauptbremszylinder verbunden. Die Bremsanlage umfasst neben radindividuellen Einlassventilen radindividuelle Auslassventile, welche die Radbremsen mit dem Druckmittelvorratsbehälter verbinden, ein Kreistrennventil sowie insgesamt vier Trennventile zur Abtrennung des Hauptbremszylinders und der elektrisch steuerbaren Druckquellen von den Einlassventilen. Weiterhin umfasst die Bremsanlage eine zentrale Steuer- und Regeleinheit, eine der ersten Druckquelle zugeordnete erste Steuer- und Regeleinheit und eine der zweiten Druckquelle zugeordnete zweite Steuer- und Regeleinheit. Die erste und zweite Steuer- und Regeleinheit dienen jeweils der Ansteuerung der entsprechenden Druckquelle. Mittels der zentralen Steuer- und Regeleinheit wird das Kreistrennventil betätigt. Die Betätigung der beiden Druckquellen-Trennventile wird ebenfalls mittels der zentralen Steuer- und Regeleinheit durchgeführt.

Aus der US 2016/167632 A1 ist eine Bremsanlage mit zwei elektrisch betätigbaren Druckquellen sowie einem Hauptbremszylinder bekannt, wobei die erste Druckquelle über je ein erstes, stromlos geschlossen ausgeführtes Radventil mit den Radbremsen verbunden ist und die zweite Druckquelle über je ein zweites, ebenfalls stromlos geschlossen ausgeführtes Radventil mit den Radbremsen verbunden ist. Im normalen Betriebsmodus (Mode I) werden zwei der Radbremsen mittels der einen Druckquelle (Kreis 1) und die anderen zwei der Radbremsen mittels der anderen Druckquelle (Kreis 2) betätigt, wobei zumindest vier Radventile zum Öffnen angesteuert werden müssen.

In der US 2016/0009267 A1 wird eine Bremsanlage mit zwei elektrisch betätigbaren Druckquellen beschrieben. Jeder Radbremse ist ein Einlassventil sowie ein Auslassventil, welches die Radbremse mit einem Reservoir verbindet, zugeordnet. Beide Druckquellen sind zusammengeschaltet und über vier weitere Trenn- bzw. Zuschaltventile mit den Einlassventilen verbunden.

Aus der DE 10 2011 081 461 A1 ist eine Bremsanlage bekannt mit je Radbremse einem ersten Radventil und einem stromlos geschlossen ausgeführten zweiten Radventil sowie einer elektrisch betätigbaren Druckquelle, welche über eine Bremskreisversorgungsleitung mit den stromlos geschlossen ausgeführten zweiten Radventilen verbunden ist. Weiterhin weist die Bremsanlage einen elektrisch betätigbaren Zusatzverstärker auf, welcher mit einem Zwischenraum eines bremspedalbetätigten Hauptbremszylinders verbunden ist. Die zwei Druckkammern des Hauptbremszylinders sind über zwei Bremskreisleitungen mit den ersten Radventilen verbunden. Der Zusatzverstärker ist zur Betätigung des Hauptbremszylinders vorgesehen. In der Normalbetriebsart der Bremsanlage werden die Radbremsen mittels eines Druckaufbaus durch die elektrisch betätigbare Druckquelle betätigt, wobei der Hauptbremszylinder von den Radbremsen getrennt ist.

In zukünftigen Bremsanlagen, welche auch für das hochautomatisierte Fahren geeignet sein sollen, soll auf eine mechanische und/oder hydraulische Rückfallebene, in welcher der Fahrer durch Muskelkraft die Radbremsen betätigt kann, verzichtet werden. Unabhängig davon, ob eine mechanischhydraulische Rückfallebene vorhanden ist oder nicht, muss die Bremsanlagen für das hochautomatisierte Fahren eine ausreichende Verfügbarkeit aufweisen und "fail-operational" ausgeführt sein. Dies gilt für einen hydraulischen Fehler, wie z.B. eine Leckage, oder einen elektrischen Fehler, wie z.B. einen Ausfall einer elektrischen Energieversorgung oder einen Ausfall einer elektronischen Ansteuer-Vorrichtung.

Es ist Aufgabe der vorliegenden Erfindung, eine Bremsanlage mit zwei elektrisch betätigbaren Druckquellen sowie ein Verfahren zum Betrieb einer solchen Bremsanlage bereitzustellen, welches für hochautomatisiert oder autonom fahrende Kraftfahrzeuge geeignet ist und eine entsprechend ausreichende Verfügbarkeit besitzt. Dabei soll die Bremsanlage kostengünstig herstellbar sein.

Diese Aufgabe wird erfindungsgemäß durch eine Bremsanlage gemäß Anspruch 1 und ein Verfahren zum Betrieb gemäß Anspruch 15 oder 17 gelöst.

Der Erfindung liegt der Gedanke zugrunde, dass für jede der Radbremsen ein elektrisch betätigbares, stromlos offen ausgeführtes erstes Radventil sowie ein elektrisch betätigbares, stromlos geschlossen ausgeführtes zweites Radventil vorgesehen ist und dass die erste elektrisch betätigbare Druckquelle über eine erste Bremsversorgungsleitung mit den ersten, stromlos offen ausgeführten Radventilen verbunden ist und die zweite elektrisch betätigbare Druckquelle über eine zweite Bremsversorgungsleitung mit den zweiten, stromlos geschlossen ausgeführten Radventilen verbunden ist. Somit ist die erste elektrisch betätigbare Druckquelle zur Betätigung der Radbremsen mit jeder der Radbremsen über das jeweilige erste, stromlos offen ausgeführte Radventil verbunden und die zweite elektrisch betätigbare Druckquelle zur Betätigung der Radbremsen mit jeder der Radbremsen über das jeweilige zweite, stromlos geschlossen ausgeführte Radventil verbunden. In einer Normalbetriebsart wird bei einer Normalbremsung lediglich die erste Druckquelle zum Aufbau eines Druckes zur Betätigung der Radbremsen angesteuert, wobei keines der Ventile betätigt wird. Ein Vorteil der Erfindung liegt darin, dass - trotz einer hohen Verfügbarkeit bei hydraulischen oder elektrischen Fehlern - im Vergleich zu bekannten Bremsanlagen mit zwei elektrisch ansteuerbaren Druckquellen weniger elektrisch betätigbare Ventile benötigt werden, speziell kann auf zwischen den Druckquellen und den Radventilen angeordnete Trennventile verzichtet werden.

Gemäß einer ersten bevorzugten Ausführungsform ist in der ersten Bremsversorgungsleitung, d.h. zwischen der ersten elektrisch betätigbaren Druckquelle und den ersten Radventilen, kein elektrisch betätigbares Ventil angeordnet. Hierdurch werden Kosten gespart und unnötige Strömungswiederstände zwischen Druckquelle und Radventilen vermieden.

Mit demselben Vorteil ist bevorzugt in der zweiten Bremsversorgungsleitung, d.h. zwischen der zweiten elektrisch betätigbaren Druckquelle und den zweiten Radventilen, kein elektrisch betätigbares Ventil angeordnet.

Besonders bevorzugt ist kein Ventil, auch kein Rückschlagventil, in der ersten und der zweiten Bremsversorgungsleitung angeordnet.

Gemäß einer zweiten bevorzugten Ausführungsform ist in der ersten Bremsversorgungsleitung ein erstes elektrisch betätigbares Kreistrennventil angeordnet, mittels welchem zwei der ersten Radventile von der ersten Druckquelle hydraulisch getrennt werden können. Das Kreistrennventil ermöglicht eine bedarfsweise Teilung in zwei Bremskreise mit je zwei Radbremsen und so ein Blenden zwischen den Bremskreisen.

Bevorzugt ist auch in der zweiten Bremsversorgungsleitung ein zweites elektrisch betätigbares Kreistrennventil angeordnet, mittels welchem zwei der zweiten Radventile von der zweiten Druckquelle hydraulisch getrennt werden können, wobei die zwei zweiten Radventile anderen Radbremsen zugeordnet sind als die zwei ersten Radventile. Bei entsprechender Zuordnung der Radbremsen zu den Achsen des Fahrzeugs ist mittels der Kreistrennventile ein achsweises Blenden möglich.

Gemäß einer bevorzugten Weiterbildung der Erfindung umfasst die Bremsanlage eine erste elektronische Vorrichtung, mittels welcher die erste Druckquelle betätigt wird, und eine zweite elektronische Vorrichtung, mittels welcher die zweite Druckquelle betätigt wird. Dabei ist die zweite elektronische Vorrichtung von der ersten elektronischen Vorrichtung elektrisch unabhängig, so dass ein elektrischer oder elektronischer Fehler in einer der elektronischen Vorrichtungen nicht zu einem Ausfall beider elektronischer Vorrichtungen führt.

Die zwei elektronischen Vorrichtungen sind voneinander elektrisch unabhängig in dem Sinne, dass ein Ausfall der ersten elektronischen Vorrichtung keinen Ausfall der zweiten elektronischen Vorrichtung bewirkt und umgekehrt, d.h. die beiden elektronischen Vorrichtungen sind galvanisch getrennt.

Bevorzugt wird daher die erste elektronische Vorrichtung von einer ersten elektrischen Energieversorgung und die zweite elektronische Vorrichtung von einer zweiten (redundanten) elektrischen Energieversorgung versorgt, wobei die erste elektrische Energieversorgung von der zweiten elektrischen Energieversorgung unabhängig ist.

Alternativ ist es bevorzugt, dass die erste elektronische Vorrichtung eine erste elektrische Energieversorgung und die zweite elektronische Vorrichtung eine zweite elektrische Energieversorgung umfasst, wobei die erste elektrische Energieversorgung von der zweiten elektrischen Energieversorgung unabhängig ist.

Die beiden elektronischen Vorrichtungen können in einem gemeinsamen Gehäuse oder auf einer gemeinsamen Leiterplatte, z.B. in einer gemeinsamen elektronischen Steuer- und Regeleinheit (ECU), angeordnet sein. Alternativ können die beiden elektronischen Vorrichtungen in zwei getrennten Gehäusen oder auf zwei getrennten Leiterplatten, z.B. in zwei elektronischen Steuer- und Regeleinheiten (ECU1, ECU2), angeordnet sein.

Die erste elektronische Vorrichtung ist zur Betätigung bzw. Ansteuerung der ersten Druckquelle ausgebildet. Bevorzugt wird die erste Druckquelle auch von der ersten elektronischen Vorrichtung mit elektrischer Energie versorgt. Entsprechend wird mittels der zweiten elektronischen Vorrichtung die zweite Druckquelle betätigt bzw. angesteuert. Bevorzugt wird die zweite Druckquelle auch von der zweiten elektronischen Vorrichtung mit elektrischer Energie versorgt.

Bevorzugt sind die ersten Radventile jeweils doppelt ansteuerbar ausgeführt und jedes der ersten Radventile kann mittels der ersten und mittels der zweiten elektronischen Vorrichtung betätigt werden. So ist eine Betätigung der Radbremsen auch bei einem Ausfall der ersten elektronischen Vorrichtung oder der ersten Energieversorgung möglich, indem mittels der zweiten elektronischen Vorrichtung die zweiten Druckquelle angesteuert und die ersten Radventile geschlossen werden, um ein Abfließen von Druckmittel über die ersten Radventile zu verhindern.

Die zweiten Radventile werden bevorzugt mittels der zweiten elektronischen Vorrichtung betätigt. So ist eine Betätigung der Radbremsen auch bei einem Ausfall der ersten elektronischen Vorrichtung oder der ersten Energieversorgung möglich, indem mittels der zweiten elektronischen Vorrichtung die zweiten Druckquelle angesteuert, die ersten Radventile geschlossen und die zweiten Radventile geöffnet werden. Die zweiten Radventile werden besonders bevorzugt ausschließlich mittels der zweiten elektronischen Vorrichtung betätigt, um die Anzahl von kostenintensiveren, doppelt ansteuerbaren Ventilen möglichst gering zu halten.

Bevorzugt ist jeder der Druckquellen ein redundant ausgeführter Drucksensor zugeordnet, um eine Regelung des Systemdrucks in der ersten bzw. zweiten Bremsversorgungsleitung zu ermöglichen.

Gemäß einer bevorzugten Ausführungsform der Erfindung ist zumindest eine der Druckquellen als eine Zylinder-Kolben-Anordnung ausgeführt mit einem Druckraum, welcher von einem Kolben begrenzt wird, der mittels eines Elektromotors und eines Rotations-Translationsgetriebes für einen Druckaufbau in dem Druckraum bzw. in den Radbremsen in eine Betätigungsrichtung und für einen Druckabbau in dem Druckraum bzw. in den Radbremsen in die der Betätigungsrichtung entgegengesetzte Richtung verschiebbar ist. Derartige Druckquellen können bedarfsgerecht mit hoher Präzision zeitliche Bremsdruckverläufe einstellen.

Bevorzugt ist die Zylinder-Kolben-Anordnung derart ausgeführt, dass der Druckraum in einem unbetätigten Zustand des Kolbens über zumindest ein Schnüffelloch mit dem Druckmittelvorratsbehälter verbunden ist, wobei diese Verbindung bei einer Betätigung des Kolbens unterbrochen wird.

Bevorzugt ist in dem Druckraum der Zylinder-Kolben-Anordnung ein Rückstellelement vorgesehen, welches bei stromlosem Elektromotor den Kolben in dem unbetätigten Zustand positioniert. Vorteilhafterweise ist das Rotations-Translationsgetriebe hierzu nicht selbsthemmend ausgeführt. So wird bei einem Ausfall der ersten Druckquelle oder der ersten elektronischen Vorrichtung der Kolben in dem unbetätigten Zustand positioniert, wodurch die Verbindung vom Druckraum zum Druckmittelvorratsbehälter offen ist. Über diese Verbindung kann dann bei einer Antiblockierregelung Druckmittel über eines der ersten Ventile und den Druckraum der ersten Druckquelle zum Druckmittelvorratsbehälter abfließen, um einen Druckabbau an der zugehörigen Radbremse durchzuführen. Besonders bevorzugt positioniert das Rückstellelement bei stromlosem Elektromotor den Kolben an einem Anschlag entgegen der Betätigungsrichtung.

Gemäß einer bevorzugten Ausführungsform der Erfindung ist zumindest eine der Druckquellen als eine Kolbenpumpe ausgeführt, deren Saugseite mit dem Druckmittelvorratsbehälter und deren Druckseite mit der der Druckquelle zugeordneten Bremsversorgungsleitung verbunden ist, wobei der Kolbenpumpe ein elektrisch betätigbares Trennventil hydraulisch parallel geschaltet ist.

Dies bedeutet, dass zwischen der Bremsversorgungsleitung und dem Druckmittelvorratsbehälter eine hydraulische Verbindung vorhanden ist, in welcher das Trennventil angeordnet ist. Über diese Verbindung kann bei geöffnetem Trennventil Druckmittel aus einer der Radbremsen über das entsprechende zweite Radventil in den Druckmittelvorratsbehälter abgelassen werden, um z.B. bei einer Druckbereitstellung mittels der anderen Druckquelle einen Druckabbau an der entsprechenden Radbremse durchzuführen (z.B. für eine radindividuelle Druckregelung). Das parallel geschaltete Trennventil ermöglicht bei einer Druckbereitstellung durch die Kolbenpumpe eine Druckregelung durch Überströmen. Das Trennventil ist besonders bevorzugt stromlos geschlossen ausgeführt, um ein unbeabsichtigtes Abfließen von Druckmittel in den Druckmittelvorratsbehälter zu verhindern.

Das Trennventil wird bevorzugt mittels der der Druckquelle zugeordneten elektronischen Vorrichtung betätigt. Das Trennventil wird besonders bevorzugt ausschließlich mittels der der Druckquelle zugeordneten elektronischen Vorrichtung betätigt, um die Anzahl von kostenintensiveren, doppelt ansteuerbaren Ventilen möglichst gering zu halten.

Gemäß einer bevorzugten Ausführungsform der Erfindung ist die erste Druckquelle als eine Zylinder-Kolben-Anordnung und die zweite Druckquelle als eine Kolbenpumpe ausgeführt.

Die Erfindung betrifft auch ein Verfahren zum Betrieb einer Bremsanlage mit zwei elektrisch betätigbaren Druckquellen.

Bevorzugt werden bei einem Ausfall der ersten Druckquelle oder der ersten elektronischen Vorrichtung die ersten Radventile geschlossen und die zweiten Radventile geöffnet sowie die zweite Druckquelle zum Aufbau eines Druckes betätigt. Besonders bevorzugt werden hierbei die ersten Radventile, die zweiten Radventile sowie die zweite Druckquelle mittels der zweiten elektronischen Vorrichtung betätigt.

Bevorzugt wird bei einem Ausfall der ersten Druckquelle oder der ersten elektronischen Vorrichtung eine radindividuelle Schlupfreglung durchgeführt, wobei ein Druckabbau an einer der Radbremsen durch Öffnen des entsprechenden ersten Radventils durchgeführt wird, so dass Druckmittel über die erste Druckquelle und eine Rücklaufleitung zu dem Druckmittelvorratsbehälter abfließt. Besonders bevorzugt werden hierbei die zweite Druckquelle zur Bereitstellung eines Bremsdruckes und das entsprechende erste Radventil / die entsprechenden ersten Radventile mittels der zweiten elektronischen Vorrichtung betätigt.

In einer Normalbetriebsart wird bei einer Normalbremsung lediglich die erste Druckquelle zum Aufbau eines Druckes zur Betätigung der Radbremsen angesteuert. Dabei wird keines der Ventile (d.h. kein erstes Radventil, kein zweites Radventil, kein Trennventil) betätigt.

Unter einer Normalbremsung wird eine durch einen Fahrer oder eine Autopilotfunktion initiierte Bremsung verstanden, bei welcher alle Radbremsen mit demselben Bremsdruck beaufschlagt werden und keine radindividuelle Bremsdruckregelung stattfindet.

Bevorzugt wird in der Normalbetriebsart eine radindividuelle Schlupfreglung durch Ansteuerung der ersten Radventile, der zweiten Radventile und des Trennventils durchgeführt, wobei ein Druckabbau an einer der Radbremsen durch Öffnen des entsprechenden zweiten Radventils und des Trennventils durchgeführt wird.

Weitere bevorzugte Ausführungsformen der Erfindung ergeben sich aus den Unteransprüchen und der nachfolgenden Beschreibung anhand einer Figur.

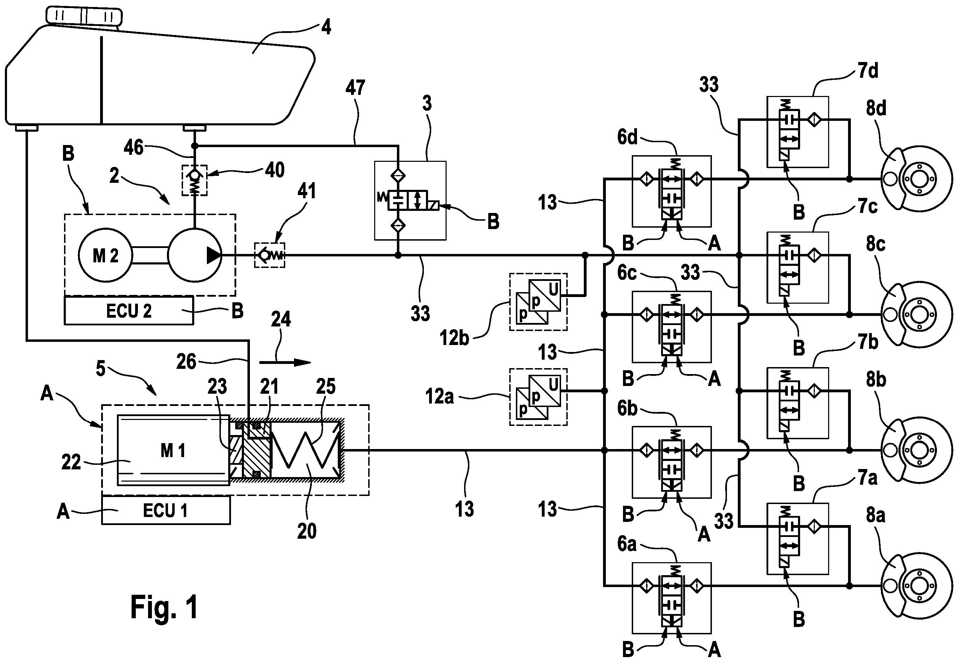

Es zeigt schematisch
- Fig. 1: ein Ausführungsbeispiel einer erfindungsgemäßen Bremsanlage.

In Fig. 1 ist ein Ausführungsbeispiel einer erfindungsgemäßen Bremsanlage für ein Kraftfahrzeug mit vier hydraulisch betätigbaren Radbremsen 8a-8d schematisch dargestellt. Die Bremsanlage umfasst eine erste elektrisch steuerbare Druckquelle 5, eine zweite elektrisch steuerbare Druckquelle 2, einen unter Atmosphärendruck stehenden Druckmittelvorratsbehälter 4 und je Radbremse 8a-8d ein erstes elektrisch betätigbares Radventil 6a-6d (auch Einlassventil genannt) und ein zweites elektrisch betätigbares Radventil 7a-7d (auch Auslassventil genannt).

Die ersten Radventile 6a-6d sind stromlos offen ausgeführt, die zweiten Radventile 7a-7d sind stromlos geschlossen ausgeführt. Die ersten Radventile 6a-6d sind vorteilhafterweise analogisiert oder analog angesteuert ausgeführt, um eine exakte Druckeinstellung an den Radbremsen 8a-8d zu ermöglichen.

Zur Betätigung der Radbremsen 8a-8d ist sowohl die erste elektrisch betätigbare Druckquelle 5 als auch die zweite elektrisch betätigbare Druckquelle 2 mit jeder der Radbremsen 8a-8d hydraulisch trennbar verbunden. Dabei ist die erste Druckquelle 5 über eine erste Bremsversorgungsleitung 13 mit den ersten Radventilen 6a-6d verbunden, die zweite Druckquelle 2 ist über eine zweite Bremsversorgungsleitung 33 mit den zweiten Radventilen 7a-7d verbunden.

Jeder der Radbremsen 8a-8d ist also ein stromlos offen ausgeführtes, erstes Radventil 6a-6d und ein stromlos geschlossen ausgeführtes, zweites Radventil 7a-7d zugeordnet. Dabei ist die erste elektrisch betätigbare Druckquelle 5 mit den Radbremsen 8a-8d über die ersten Radventile 6a-6d verbunden (bzw. ist die erste Druckquelle mit jeder der Radbremsen über das jeweilige erste Radventil verbunden) und die zweite elektrisch betätigbare Druckquelle 2 ist über die zweiten Radventile 7a-7d mit den Radbremsen 8a-8d verbunden (bzw. die zweite Druckquelle ist mit jeder der Radbremsen über das jeweilige zweite Radventil verbunden). Das Bremssystem enthält keine weiteren (Rad)Ventile, welche den einzelnen Radbremsen 8a-8d zugeordnet sind.

Je Radbremse 8a, 8b, 8c, 8d ist ein Ausgangsanschluss des ersten Radventils 6a, 6b, 6c, 6d und ein Ausgangsanschluss des zweiten Radventils 7a, 7b, 7c, 7d zusammengeschaltet und mit der Radbremse verbunden. Die Eingangsanschlüsse der ersten Radventile 6a-6d sind über die erste Bremsversorgungsleitung 13 mit der ersten Druckquelle 5 bzw. deren Druckraum direkt hydraulisch verbunden und die Eingangsanschlüsse der zweiten Radventile 7a-7d sind über die zweite Bremsversorgungsleitung 33 mit der zweiten Druckquelle 2 bzw. deren Druckraum direkt hydraulisch verbunden. "Direkt hydraulisch verbunden" ist hier in dem Sinne zu verstehen, dass kein elektrisch betätigbares Ventil oder gar kein Ventil (z.B. Rückschlagventil) in der Bremsversorgungsleitung 13 bzw. 33 angeordnet ist.

An die erste Bremsversorgungsleitung 13 ist ein redundant ausgeführter Drucksensor 12a angeschlossen, welcher der ersten Druckquelle 5 zugeordnet ist und den von der Druckquelle 5 bereitgestellten Druck misst. Ebenso ist der zweiten Druckquelle 2 ein redundant ausgeführter Drucksensor 12b zugeordnet, welcher den von der Druckquelle 2 bereitgestellten Druck misst und an die zweite Bremsversorgungsleitung 33 angeschlossen ist.

Die Bremsanlage umfasst eine erste elektronische Vorrichtung A und eine zweite elektronische Vorrichtung B, wobei die zweite elektronische Vorrichtung B von der ersten elektronischen Vorrichtung A elektrisch unabhängig ist. Die elektronischen Vorrichtungen A, B sind galvanisch getrennt. Bei einem Fehler in der ersten elektronischen Vorrichtung A z.B. durch einen elektrischen Defekt bleibt die zweite elektronische Vorrichtung voll funktionsfähig.

Die elektronische Vorrichtung A umfasst elektrische und/oder elektronische Bauelemente zur Ansteuerung und Betätigung der ersten Druckquelle 5 (durch den Pfeil mit A in Fig. 1 angedeutet). Vorrichtung A kann z.B. als eine erste elektronische Steuer- und Regeleinheit (ECU 1) oder als ein erster Teil einer elektronischen Steuer- und Regeleinheit ausgeführt sein. Die elektronische Vorrichtung A kann eine erste elektrische Energiequelle, durch welche die Vorrichtung A selbst und die Druckquelle 5 mit Energie versorgt wird, umfassen oder Vorrichtung A ist mit einer ersten elektrischen Energiequelle (z.B. einem ersten Bordnetz) verbunden. Die erste Druckquelle 5 kann direkt von der ersten elektrischen Energiequelle mit Energie versorgt werden oder von der Vorrichtung A (d.h. indirekt von der ersten elektrischen Energiequelle).

Die elektronische Vorrichtung B umfasst elektrische und/oder elektronische Bauelemente zur Ansteuerung und Betätigung der zweiten Druckquelle 2 (durch den Pfeil mit B in Fig. 1 angedeutet). Vorrichtung B kann z.B. als eine zweite elektronische Steuer- und Regeleinheit (ECU 2) oder als ein zweiter Teil einer elektronischen Steuer- und Regeleinheit ausgeführt sein. Die elektronische Vorrichtung B kann eine zweite elektrische Energiequelle, durch welche die Vorrichtung B selbst und die Druckquelle 2 mit Energie versorgt wird, umfassen oder Vorrichtung B ist mit einer zweiten elektrischen Energiequelle (z.B. einem zweiten Bordnetz) verbunden. In jedem Fall ist es für eine ausreichende Verfügbarkeit der Bremsanlage vorteilhaft, dass die zweite elektrische Energiequelle von der ersten Energiequelle unabhängig ist. Die zweite Druckquelle 2 kann direkt von der zweiten elektrischen Energiequelle mit Energie versorgt werden oder von der Vorrichtung B (d.h. indirekt von der zweiten elektrischen Energiequelle).

Die ersten Radventile 6a-6d sind jeweils doppelt ansteuerbar ausgeführt. Hierzu können die ersten Radventile 6a-6d jeweils mit zwei Ansteuerspulen versehen sein, wobei jede der Ansteuerspulen den Ventilstößel betätigen kann.

Jedes der ersten Radventile kann wahlweise mittels der ersten elektronischen Vorrichtung A oder mittels der zweiten elektronischen Vorrichtung B betätigt werden. Hierzu wird z.B. die eine der Ansteuerspulen von der ersten elektronischen Vorrichtung A und die andere Ansteuerspule von der zweiten elektronischen Vorrichtung B angesteuert bzw. bestromt.

Die zweiten Radventile 7a-7d werden mittels der zweiten elektronischen Vorrichtung B betätigt. Beispielsgemäß sind die zweiten Radventile nicht mittels der ersten elektronischen Vorrichtung A betätigbar, d.h. die zweiten Radventile werden ausschließlich mittels der zweiten elektronischen Vorrichtung B betätigt.

Um eine hohe Verfügbarkeit der radindividuellen Druckregelung bereitzustellen, werden zumindest die zweiten Radventile 7a-7d von einer redundanten Stromversorgung mit elektrischer Energie versorgt. Alternativ wird die zweite elektronische Vorrichtung B von einer redundanten Stromversorgung mit elektrischer Energie versorgt.

Beispielsgemäß wird die erste Druckquelle 5 durch einen sogenannten Linearaktuator gebildet. Hierzu weist die Druckquelle 5 einen Elektromotor 22 auf, dessen rotatorische Bewegung mittels eines schematisch angedeuteten Rotations-Translationsgetriebes 23 in eine translatorische Bewegung eines Kolbens 21 umgesetzt wird, der für einen Druckaufbau in eine Betätigungsrichtung 24 in einen hydraulischen Druckraum 20 verschoben wird. Für einen Druckabbau wird der Kolben 21 in die der Betätigungsrichtung 24 entgegengesetzte Richtung verschoben.

Der Druckraum 20 der ersten Druckquelle 5 ist, unabhängig vom Betätigungszustand des Kolbens 21, mit der ersten Bremsversorgungsleitung 13 hydraulisch verbunden.

Der Druckraum 20 ist außerdem in einem unbetätigten Zustand des Kolbens 21 über ein oder mehrere Schnüffellöcher mit dem Druckmittelvorratsbehälter 4 verbunden. Beispielsgemäß ist eine Verbindungsbohrung in dem Kolben 21 vorhanden, welche den Druckraum 20 mit einem Anschlussbereich verbindet, der im unbetätigten Zustand des Kolbens 21 mit einer Rücklaufleitung 26 zum Druckmittelvorratsbehälter 4 in hydraulischer Verbindung steht. Die Verbindung zwischen Druckraum 20 und Rücklaufleitung 26 (und damit Druckmittelvorratsbehälter 4) wird bei einer (ausreichenden) Betätigung des Kolbens 21 in Betätigungsrichtung 24 getrennt.

Damit in einem unbestromten Zustand des Elektromotors 22 eine hydraulische Verbindung zwischen Druckraum 20 und Druckmittelvorratsbehälter 4 besteht, ist in dem Druckraum 20 ein Rückstellelement 25, z.B. eine Druckfeder, vorgesehen, welches bei stromlosem Elektromotor 22 den Kolben 21 in dem unbetätigten Zustand, z.B. an einem Anschlag entgegen der Betätigungsrichtung, positioniert. Um dies zu ermöglichen, ist das Rotations-Translationsgetriebe 23 nicht selbsthemmend ausgelegt. So sind die Radbremsen 8a-8d bei unbestromtem Elektromotor 22 (und unbestromten ersten Radventilen 6a-6d) mit dem Druckmittelvorratsbehälter 4 im Sinne eines Druckausgleichs verbunden. So kann z.B. Bremsdruck in den Radbremsen 8a-8d abgebaut werden.

Beispielsgemäß ist die zweite Druckquelle 2 als eine Kolbenpumpe ausgeführt. Die Saugseite 40 der Kolbenpumpe ist über eine Ansaugleitung 46 mit dem Druckmittelvorratsbehälter 4 verbunden.

Die Druckseite 41 der Kolbenpumpe ist mit der zweiten Bremsversorgungsleitung 33, und damit den zweiten Radventilen 7a-7d verbunden. An bzw. vor dem Sauganschluss der Kolbenpumpe ist ein in Richtung des Druckmittelvorratsbehälters 4 schließendes Rückschlagventil vorgesehen. An bzw. vor dem Druckanschluss der Kolbenpumpe ist ein in Richtung der Bremsversorgungsleitung 33 öffnendes Rückschlagventil vorgesehen. Die genannten Rückschlagventile sind üblicherweise Teil der Kolbenpumpe, was in Fig. 1 durch die gestrichelten Linien angedeutet ist.

Vorteilhafterweise ist der Kolbenpumpe ein stromlos geschlossenes Trennventil 3 hydraulisch parallel geschaltet, welches zur Regelung des Druckes der Kolbenpumpe durch Überströmen verwendet wird. Beispielsgemäß ist eine hydraulische Verbindung 47 zwischen Bremsversorgungsleitung 33 und Ansaugleitung 46 vorgesehen, in welcher das Trennventil 3 angeordnet ist.

Trennventil 3 wird mittels der zweiten elektronischen Vorrichtung B betätigt, um eine Druckregelung zu gewährleisten. Beispielsgemäß ist Trennventil 3 nicht mittels der ersten elektronischen Vorrichtung A betätigbar, d.h. das Trennventil 3 wird ausschließlich mittels der zweiten elektronischen Vorrichtung B betätigt.

Die beispielsgemäße Bremsanlage der Fig. 1 umfasst vorteilhafterweise insgesamt nur neun Magnetventile 6a-6d, 7a-7d, 3.

Beispielsgemäß sind die Radbremsen 8a und 8b einer der Fahrzeugachsen und die Radbremsen 8c und 8d der anderen Fahrzeugachse zugeordnet.

Um ein achsweises Blending durchführen bzw. achsweise unterschiedliche Bremsdrücke einstellen zu können, ist vorteilhafterweise gemäß einem nicht dargestellten Ausführungsbeispiel in der ersten Bremsversorgungsleitung 13 zwischen je zwei der ersten Radventile, nämlich beispielsgemäß zwischen den Radventilen 6a, 6b und den Radventilen 6c, 6d, ein weiteres elektrisch betätigbares Ventil, auch erstes Kreistrennventil genannt, angeordnet. Weiterhin ist in der zweiten Bremsversorgungsleitung 33 zwischen je zwei der zweiten Radventile, nämlich beispielsgemäß zwischen den Radventilen 7a, 7b und den Radventilen 7c, 7d noch ein weiteres elektrisch betätigbares Ventil, auch zweites Kreistrennventil genannt, angeordnet. So können durch das erste Kreistrennventil die zwei ersten Radventile 6c, 6d von der ersten Druckquelle 5 hydraulisch getrennt werden und durch das zweite Kreistrennventil die zwei zweiten Radventile 7a, 7b von der zweiten Druckquelle 2 hydraulisch getrennt werden, wobei die zwei zweiten Radventile 7a, 7b anderen Radbremsen zugeordnet sind als die zwei ersten Radventile 6c, 6d.

Verfahren zum Betreiben der beispielsgemäßen Bremsanlagen werden im Folgenden beschrieben.

Die beispielsgemäßen Bremsanlagen sind "Fail-operational" Bremssysteme für autonomes Fahren mit zwei redundanten Druckquellen. Beispielsgemäß sind die Druckquellen als ein linearer Stellantrieb (Linearaktuator 5 mit Elektromotor M1) und als ein Kolbenpumpenantrieb (Aktuator 2 mit Elektromotor M2) ausgeführt. Alternativ ist auch die Kombination zweier Linearantriebe oder zweier Kolbenantriebe möglich. Die Druckquellen 2 und 5 bzw. deren Aktuatoren sind vorteilhafterweise für zwei unterschiedliche Betriebspunkte optimiert.

Der Fahrerbremswunsch- bzw. der Autopilotenbremssollwert steht zur Realisierung eines "By-Wire-Bremssystems" der Druckquellenregelung auf einem nicht dargestellten Kommunikationsbus zur Verfügung.

Die Bremsanlage umfasst zwei redundante elektrische Energiequellen (Bordnetze) bzw. ist mit diesen verbunden, wobei die elektrischen Komponenten wie oben beschrieben von der einen und/oder der anderen Energiequelle versorgt werden (durch A bzw. B in Fig. 1 gekennzeichnet).

Der Systemdruck wird über zwei redundante Drucksensoren 12a, 12b erfasst und wird als Istwert von der Druckregelung eingelesen.

Während einer Normalbremsung im "By-Wire-Betrieb" (insbesondere im fehlerfreien Bordnetzbetrieb) werden keine Ventile geschaltet und die Radbremsen 8a-8d sind einkreisig über die ersten Ventile 6a-6d hydraulisch an die erste Druckquelle 5 angekoppelt. Durch Überfahren des Schnüffellochs mit dem Kolben 21 erfolgt der Druckaufbau in dem Druckraum 20.

Bei einem Ausfall des der ersten Druckquelle 5 zugeordneten (ersten) Bordnetzes (bzw. der erster elektronischen Vorrichtung A) übernimmt die Druckquelle 2 die Normalbremsung. Da die ersten, stromlos offenen Radventile 6a-6d mit zwei Versorgungsspannungen redundant aufgebaut sind (d.h. mittels der ersten Energiequelle bzw. der ersten elektronischen Vorrichtung A und mittels der zweiten Energiequelle bzw. der zweiten elektronischen Vorrichtung B betätigt werden können), werden nun über die andere (zweite) Energiequelle/Bordnetz (bzw. Ansteuerversorgungsspannung, elektronische Vorrichtung B) die ersten Radventile 6a-6d geschlossen und die zweiten, stromlos geschlossene Radventile 7a-7d geöffnet. Ein Druckaufbau erfolgt über die Kolbenpumpe 2. Zur Druckregelung wird das stromlos geschlossene Trennventil 3 verwendet.

Während einer Antiblockierregelung (ABS-Betrieb) im fehlerfreien Bordnetzbetrieb erfolgt die Druckbereitstellung durch die erste Druckquelle 5. Eine radindividuelle Druckregelung wird mittels der ersten und zweiten Radventile 6a-6d, 7a-7d durchgeführt. Für einen Druckabbau wird Druckmittel über das oder die zweiten Radventile 7a-7d und das angesteuerte (geöffnete) Trennventil 3 in den Druckmittelvorratsbehälter 4 abgelassen.

Eine radindividuelle Druckregelung ist auch bei einigen Fehlern in der ersten Druckquelle 5 bzw. der ersten Vorrichtung A möglich, solange gewährleistet ist, dass die Rückstellfeder 25 den ggf. verfahrenen Kolben 21 zurückschiebt und die hydraulische Verbindung von dem Druckraum 20 zum Druckmittelvorratsbehälter 4 über das Schnüffelloch "freigegeben" ist. Ein Druckaufbau erfolgt dann über die zweite Druckquelle 2 und ein Druckabbau erfolgt über die ersten Radventile 6a-6d und den Druckraum 20 der ersten Druckquelle 5.

Während einer Antiblockierregelung (ABS-Betrieb) mit Bordnetzausfall übernimmt im Fehlerfall der ersten Energieversorgung (A) die zweite Druckquelle 2 die Antiblockierregelung. Für eine Zentraldruckregelung werden die ersten Radventile 6a-6d (mittels Vorrichtung B) geschlossen und die zweiten Radventile 7a-7d (mittels Vorrichtung B) angesteuert bzw. geöffnet.

Eine Zentraldruckregelung über die erste Druckquelle 5 erfolgt ebenfalls bei Ausfall der zweiten Energieversorgung (B) .

Bei Betrachtung von diversen Leckageorten und entsprechenden Maßnahmen ergeben sich folgende Hauptszenarien:
- Leckage an einer Radbremse: Die betroffene Radbremse wird durch Schließen des entsprechenden ersten und zweiten Radventils isoliert.
- Leckage in der zweiten Druckquelle 2: Mit der speziellen Anbindung der Radbremsen an die erste und zweite Druckquelle über die ersten und zweiten Radventile geht eine Isolation der zweiten Druckquelle einher, so dass eine volle Systemperformance aufrechterhalten wird.
- Leckage in der ersten Druckquelle 5: Mit der speziellen Anbindung der Radbremsen an die erste und zweite Druckquelle über die ersten und zweiten Radventile geht eine Isolation der ersten Druckquelle einher, so dass eine volle Normalbrems-Performance aufrechterhalten wird. Die ersten Radventile 6a-6d werden zur Isolation der ersten Druckquelle über die Ansteuervorrichtung B geschlossen.

Durch die Anbindung der Radbremsen 8a-8d über die SO-Ventile 6a-6d an das Schnüffelloch der ersten Druckquelle 5 wird ein Druckabbau in den Radbremsen 8a-8d bei fehlendem Bremswunsch gewährleistet.

Achsweises Blenden kann durch die Einführung von zwei weiteren Ventilen (Kreistrennventilen) zwischen jeweils zwei ersten SO-Radventilen und zweiten SG-Radventilen umgesetzt werden.

Durch die beschriebene Anbindung der zwei redundanten Druckquellen im "fail-operational-System" entfallen die aus anderen Bremsanlagen, z.B. aus der 10 2013 217 954 A1, bekannten Trennventile zwischen Druckquelle und Radventilen, sodass zur Realisierung der Regelfunktionen in der beispielsgemäßen Bremsanlage der Fig. 1 lediglich neun Ventile 6a-6d, 7a-7d, 3 benötigt werden.

Insbesondere für Elektrofahrzeuge bietet die erfindungsgemäße Bremsanlage den Vorteil einer minimalen Stromaufnahme, da für eine Normalbremsung keine Ventile zusätzlich geschaltet werden müssen und der Ruheausgangszustand beibehalten wird.

Ein weiterer Vorteil der Erfindung liegt in einer Aufrechterhaltung der radindividuellen ABS-Regelung für die meisten Fehlerfälle. Die SO-Ventile 6a-6d sind hierzu mit einer redundanten Stromversorgung bzw. Ansteuerung (A und B) aufgebaut.

## Patentansprüche

1. Bremsanlage für ein Kraftfahrzeug mit zumindest vier hydraulisch betätigbaren Radbremsen (8a-8d), umfassend
• für jede der Radbremsen (8a-8d) ein elektrisch betätigbares erstes Radventil (6a-6d) sowie ein elektrisch betätigbares, stromlos geschlossen ausgeführtes zweites Radventil (7a-7d),
• eine erste elektrisch betätigbare Druckquelle (5), die über eine erste Bremsversorgungsleitung (13) mit den ersten Radventilen (6a-6d) verbunden ist,
• eine zweite elektrisch betätigbare Druckquelle (2), die über eine zweite Bremsversorgungsleitung (33) mit den zweiten Radventilen (7a-7d) verbunden ist, und
• einen, insbesondere unter Atmosphärendruck stehenden, Druckmittelvorratsbehälter (4),
**dadurch gekennzeichnet, dass**
die ersten Radventile (6a-6d) stromlos offen ausgeführt sind und dass in einer Normalbetriebsart der Bremsanlage bei einer Normalbremsung lediglich die erste Druckquelle (5) zum Aufbau eines Druckes zur Betätigung der Radbremsen (8a-8d) angesteuert wird, wobei kein Ventil betätigt wird.

2. Bremsanlage nach Anspruch 1, **dadurch gekennzeichnet, dass** in der ersten Bremsversorgungsleitung (13) kein elektrisch betätigbares Ventil, insbesondere kein Ventil, angeordnet ist.

3. Bremsanlage nach Anspruch 1 oder 2, **dadurch gekennzeichnet, dass** in der zweiten Bremsversorgungsleitung (33) kein elektrisch betätigbares Ventil, insbesondere kein Ventil, angeordnet ist.

4. Bremsanlage nach Anspruch 1, **dadurch gekennzeichnet, dass** in der ersten Bremsversorgungsleitung (13) ein erstes elektrisch betätigbares Kreistrennventil angeordnet ist, mittels welchem zwei der ersten Radventile (6c, 6d) von der ersten Druckquelle (5) hydraulisch getrennt werden können.

5. Bremsanlage nach Anspruch 4, **dadurch gekennzeichnet, dass** in der zweiten Bremsversorgungsleitung (33) ein zweites elektrisch betätigbares Kreistrennventil angeordnet ist, mittels welchem zwei der zweiten Radventile (7a, 7b) von der zweiten Druckquelle (2) hydraulisch getrennt werden können, wobei die zwei zweiten Radventile (7a, 7b) anderen Radbremsen zugeordnet sind als die zwei ersten Radventile (6c, 6d).

6. Bremsanlage nach einem der vorhergehenden Ansprüche, **dadurch gekennzeichnet, dass** diese eine erste elektronische Vorrichtung (A), mittels welcher die erste Druckquelle (5) betätigt wird, und eine zweite elektronische Vorrichtung (B), mittels welcher die zweite Druckquelle (2) betätigt wird, umfasst, wobei die zweite elektronische Vorrichtung (B) von der ersten elektronischen Vorrichtung (A) elektrisch unabhängig ist.

7. Bremsanlage nach Anspruch 6, **dadurch gekennzeichnet, dass** die ersten Radventile (6a-6d) jeweils doppelt ansteuerbar ausgeführt sind, wobei jedes der ersten Radventile mittels der ersten und mittels der zweiten elektronischen Vorrichtung (A, B) betätigt werden kann.

8. Bremsanlage nach Anspruch 6 oder 7, **dadurch gekennzeichnet, dass** die zweiten Radventile (7a-7d), insbesondere ausschließlich, mittels der zweiten elektronischen Vorrichtung (B) betätigt werden.

9. Bremsanlage nach einem der Ansprüche 6 bis 8, **dadurch gekennzeichnet, dass** die erste elektronische Vorrichtung (A) von einer ersten elektrischen Energieversorgung versorgt wird oder eine erste elektrische Energieversorgung umfasst, und dass die zweite elektronische Vorrichtung (B) von einer zweiten elektrischen Energieversorgung versorgt wird oder eine zweite elektrische Energieversorgung umfasst, wobei die erste elektrische Energieversorgung von der zweiten elektrischen Energieversorgung unabhängig ist.

10. Bremsanlage nach einem der vorhergehenden Ansprüche, **dadurch gekennzeichnet, dass** zumindest eine der Druckquellen (5) als eine Zylinder-Kolben-Anordnung ausgeführt ist mit einem Druckraum (20), welcher von einem Kolben (21) begrenzt wird, der mittels eines Elektromotors (22) und eines Rotations-Translationsgetriebes (23) für einen Druckaufbau in eine Betätigungsrichtung (24) und für einen Druckabbau in die der Betätigungsrichtung entgegengesetzte Richtung verschiebbar ist.

11. Bremsanlage nach Anspruch 10, **dadurch gekennzeichnet, dass** der Druckraum (20) in einem unbetätigten Zustand des Kolbens (21) über zumindest ein Schnüffelloch mit dem Druckmittelvorratsbehälter (4) verbunden ist, wobei diese Verbindung bei einer Betätigung des Kolbens (21) unterbrochen wird.

12. Bremsanlage nach Anspruch 10 oder 11, **dadurch gekennzeichnet, dass** in dem Druckraum (20) ein Rückstellelement (25) vorgesehen ist, welches bei stromlosem Elektromotor (22) den Kolben (21) in dem unbetätigten Zustand positioniert.

13. Bremsanlage nach einem der vorhergehenden Ansprüche, **dadurch gekennzeichnet, dass** zumindest eine der Druckquellen (2) als eine Kolbenpumpe ausgeführt ist, deren Saugseite (40) mit dem Druckmittelvorratsbehälter (4) und deren Druckseite (41) mit der der Druckquelle zugeordneten Bremsversorgungsleitung (33) verbunden ist, wobei der Kolbenpumpe ein elektrisch betätigbares, insbesondere stromlos geschlossen ausgeführtes, Trennventil (3) hydraulisch parallel geschaltet ist.

14. Bremsanlage nach Anspruch 13, wenn rückbezogen auf Anspruch 6, **dadurch gekennzeichnet, dass** das Trennventil (3), insbesondere ausschließlich, mittels der der Druckquelle (2) zugeordneten elektronischen Vorrichtung (B) betätigt wird.

15. Verfahren zum Betrieb einer Bremsanlage nach einem der Ansprüche 1 bis 14, **dadurch gekennzeichnet, dass** bei einem Ausfall der ersten Druckquelle (5) die ersten Radventile (6a-6d) geschlossen und die zweiten Radventile (7a-7d) geöffnet werden sowie die zweite Druckquelle (2) zum Aufbau eines Druckes betätigt wird.

16. Verfahren nach Anspruch 15, wenn rückbezogen auf Anspruch 11, **dadurch gekennzeichnet, dass** bei einem Ausfall der ersten Druckquelle (5) eine radindividuelle Schlupfreglung durchgeführt wird, wobei ein Druckabbau an einer der Radbremsen durch Öffnen des entsprechenden ersten Radventils durchgeführt wird, wobei Druckmittel über die erste Druckquelle (5) und eine Rücklaufleitung (26) zu dem Druckmittelvorratsbehälter (4) abfließt.

17. Verfahren zum Betrieb einer Bremsanlage nach Anspruch 6 oder einem der Ansprüche 7 bis 14, wenn rückbezogen auf Anspruch 6, **dadurch gekennzeichnet, dass** bei einem Ausfall der ersten elektronischen Vorrichtung (A) mittels der zweiten elektronischen Vorrichtung (B) die ersten Radventile (6a-6d) geschlossen und die zweiten Radventile (7a-7d) geöffnet werden sowie die zweite Druckquelle (2) zum Aufbau eines Druckes betätigt wird.

## Claims

1. Brake system for a motor vehicle with at least four hydraulically activated wheel brakes (8a-8d), comprising
• for each of the wheel brakes (8a-8d) an electrically activated first wheel valve (6a-6d) and an electrically activated second wheel valve (7a-7d), which is designed to be closed when de-energized,
• a first electrically activated pressure source (5), which is connected to the first wheel valves (6a-6d) via a first brake supply line (13),
• a second electrically activated pressure source (2), which is connected to the second wheel valves (7a-7d) via a second brake supply line (33), and
• a pressure medium reservoir vessel (4), which is, in particular, at atmospheric pressure,
**characterized in that**
the first wheel valves (6a-6d) are designed to be open when de-energized, and **in that**, in a normal operating mode of the brake system during a normal braking process, only the first pressure source (5) is actuated to build up a pressure to activate the wheel brakes (8a-8d), with none of the valves being activated.

2. Brake system according to Claim 1, **characterized in that** there is no electrically activated valve, in particular no valve, arranged in the first brake supply line (13).

3. Brake system according to Claim 1 or 2, **characterized in that** there is no electrically activated valve, in particular no valve, arranged in the second brake supply line (33).

4. Brake system according to Claim 1, **characterized in that** a first electrically activated circuit isolating valve by means of which two of the first wheel valves (6c, 6d) can be hydraulically disconnected from the first pressure source (5) is arranged in the first brake supply line (13).

5. Brake system according to Claim 4, **characterized in that** a second electrically activated circuit isolating valve by means of which two of the second wheel valves (7a, 7b) can be hydraulically disconnected from the second pressure source (2) is arranged in the second brake supply line (33), wherein the two second wheel valves (7a, 7b) are assigned to different wheel brakes than the two first wheel valves (6c, 6d).

6. Brake system according to one of the preceding claims, **characterized in that** said brake system comprises a first electronic device (A) by means of which the first pressure source (5) is activated, and a second electronic device (B) by means of which the second pressure source (2) is activated, wherein the second electronic device (B) is electrically independent of the first electronic device (A).

7. Brake system according to Claim 6, **characterized in that** the first wheel valves (6a-6d) are each designed to be able to be actuated in a duplicate fashion, wherein each of the first wheel valves can be activated by means of the first electronic device (A) and by means of the second electronic device (B).

8. Brake system according to Claim 6 or 7, **characterized in that** the second wheel valves (7a-7d) are activated, in particular exclusively, by means of the second electronic device (B).

9. Brake system according to one of Claims 6 to 8, **characterized in that** the first electronic device (A) is supplied by a first electrical energy supply or comprises a first electrical energy supply, and **in that** the second electronic device (B) is supplied by a second electrical energy supply or comprises a second electrical energy supply, wherein the first electrical energy supply is independent of the second electrical energy supply.

10. Brake system according to one of the preceding claims, **characterized in that** at least one of the pressure sources (5) is embodied as a cylinder-piston assembly with a pressure space (20) which is bounded by a piston (21) which can be moved, by means of an electric motor (22) and a rotational-translational transmission (23), in an activation direction (24) to build up pressure and in the direction opposite to the activation direction to reduce pressure.

11. Brake system according to Claim 10, **characterized in that** in an unactivated state of the piston (21) the pressure space (20) is connected to the pressure medium reservoir vessel (4) via at least one snifter hole, wherein this connection is interrupted when the piston (21) is activated.

12. Brake system according to Claim 10 or 11, **characterized in that** a resetting element (25), which positions the piston (21) in the unactivated state when the electric motor (22) is de-energized, is provided in the pressure space (20).

13. Brake system according to one of the preceding claims, **characterized in that** at least one of the pressure sources (2) is embodied as a piston pump whose suction side (40) is connected to the pressure medium reservoir vessel (4) and whose pressure side (41) is connected to the brake supply line (33) which is assigned to the pressure source, wherein an electrically activated isolating valve (3), which is, in particular, designed to be closed when de-energized, is connected hydraulically in parallel with the piston pump.

14. Brake system according to Claim 13, when referred back to Claim 6, **characterized in that** the isolating valve (3) is activated, in particular exclusively, by means of the electronic device (B) which is assigned to the pressure source (2).

15. Method for operating a brake system according to one of Claims 1 to 14, **characterized in that**, in the event of a failure of the first pressure source (5), the first wheel valves (6a-6d) are closed and the second wheel valves (7a-7d) are opened and the second pressure source (2) is activated to build up a pressure.

16. Method according to Claim 15, when referred back to Claim 11, **characterized in that**, in the event of a failure of the first pressure source (5), a wheel-specific slip control process is carried out, wherein a reduction in pressure is carried out at one of the wheel brakes by opening the corresponding first wheel valve, wherein pressure medium flows away to the pressure medium reservoir vessel (4) via the first pressure source (5) and a return line (26).

17. Method for operating a brake system according to Claim 6 or one of Claims 7 to 14, when referred back to Claim 6, **characterized in that**, in the event of a failure of the first electronic device (A), by means of the second electronic device (B) the first wheel valves (6a-6d) are closed and the second wheel valves (7a-7d) are opened and the second pressure source (2) is activated to build up a pressure.

## Revendications

1. Système de freinage pour un véhicule automobile, pourvu d'au moins quatre freins de roue (8a-8d) à actionnement hydraulique, comprenant
• pour chacun des freins de roue (8a-8d), une première vanne de roue (6a-6d) à actionnement électrique ainsi qu'une deuxième vanne de roue (7a-7d) à actionnement électrique, réalisée pour être fermée hors tension,
• une première source de pression (5) à actionnement électrique qui est reliée aux premières vannes de roue (6a-6d) par l'intermédiaire d'une première conduite d'alimentation de frein (13),
• une deuxième source de pression (2) à actionnement électrique qui est reliée aux deuxièmes vannes de roue (7a-7d) par l'intermédiaire d'une conduite d'alimentation de frein (33), et
• un réservoir de fluide sous pression (4), en particulier sous pression atmosphérique,
**caractérisé en ce que** les premières vannes de roue (6a-6d) sont réalisées pour être ouvertes hors tension, et **en ce que** dans un mode de fonctionnement normal du système de freinage, en cas de freinage normal, seule la première source de pression (5) est pilotée pour augmenter une pression afin d'actionner les freins de roue (8a-8d), dans lequel aucune vanne n'est actionnée.

2. Système de freinage selon la revendication 1, **caractérisé en ce qu'**aucune vanne à actionnement électrique, en particulier aucune vanne, n'est disposée dans la première conduite d'alimentation de frein (13).

3. Système de freinage selon la revendication 1 ou 2, **caractérisé en ce qu'**aucune vanne à actionnement électrique, en particulier aucune vanne, n'est disposée dans la deuxième conduite d'alimentation de frein (33).

4. Système de freinage selon la revendication 1, **caractérisé en ce que** dans la première conduite d'alimentation de frein (13) est disposée une première vanne de coupure de circuit à actionnement électrique qui permet de couper hydrauliquement deux des premières vannes de roue (6c, 6d) de la première source de pression (5).

5. Système de freinage selon la revendication 4, **caractérisé en ce que** dans la deuxième conduite d'alimentation de frein (33) est disposée une deuxième vanne de coupure de circuit à actionnement électrique qui permet de couper hydrauliquement deux des deuxièmes vannes de roue (7a, 7b) de la deuxième source de pression (2), dans lequel les deux deuxièmes vannes de roue (7a, 7b) sont associées à d'autres freins de roue que les deux premières vannes de roue (6c, 6d).

6. Système de freinage selon l'une quelconque des revendications précédentes, **caractérisé en ce qu'**il comprend un premier dispositif électronique (A) qui permet d'actionner la première source de pression (5), et un deuxième dispositif électronique (B) qui permet d'actionner la deuxième source de pression (2), le deuxième dispositif électronique (B) étant électriquement indépendant du premier dispositif électronique (A).

7. Système de freinage selon la revendication 6, **caractérisé en ce que** les premières vannes de roue (6a-6d) sont respectivement réalisées à pilotage double, dans lequel chacune des premières vannes de roue peut être actionnée au moyen du premier et au moyen du deuxième dispositif électronique (A, B).

8. Système de freinage selon la revendication 6 ou 7, **caractérisé en ce que** les deuxièmes vannes de roue (7a-7d) sont actionnées, en particulier exclusivement, au moyen du deuxième dispositif électronique (B).

9. Système de freinage selon l'une quelconque des revendications 6 à 8, **caractérisé en ce que** le premier dispositif électronique (A) est alimenté par une première alimentation en énergie électrique ou comprend une première alimentation en énergie électrique, et **en ce que** le deuxième dispositif électronique (B) est alimenté par une deuxième alimentation en énergie électrique ou comprend une deuxième alimentation en énergie électrique, la première alimentation en énergie électrique étant indépendante de la deuxième alimentation en énergie électrique.

10. Système de freinage selon l'une quelconque des revendications précédentes, **caractérisé en ce qu'**au moins l'une des sources de pression (5) est réalisée comme un ensemble à piston et cylindre, pourvue d'une chambre de pression (20) qui est délimitée par un piston (21) qui peut être déplacé au moyen d'un moteur électrique (22) et d'un mécanisme rotation/translation (23) dans une direction d'actionnement (24) pour augmenter la pression et dans la direction opposée à la direction d'actionnement pour diminuer la pression.

11. Système de freinage selon la revendication 10, **caractérisé en ce que** dans un état non actionné du piston (21), la chambre de pression (20) est reliée au réservoir de fluide sous pression (4) par un trou de reniflard, cette liaison étant interrompue par un actionnement du piston (21).

12. Système de freinage selon la revendication 10 ou 11, **caractérisé en ce que** dans la chambre de pression (20) est prévu un élément de rappel (25) qui positionne le piston (21) à l'état non actionné si le moteur électrique (22) est hors tension.

13. Système de freinage selon l'une quelconque des revendications précédentes, **caractérisé en ce qu'**au moins l'une des sources de pression (2) est réalisée sous forme de pompe à piston dont le côté aspiration (40) est relié au réservoir de fluide sous pression (4) et dont le côté pression (41) est relié à la conduite d'alimentation de frein (33) associée à la source de pression, dans lequel une vanne de coupure (3) à actionnement électrique, en particulier réalisée pour être fermée hors tension, est connectée hydrauliquement en parallèle à la pompe à piston.

14. Système de freinage selon la revendication 13 lorsqu'elle dépend de la revendication 6, **caractérisé en ce que** la vanne de coupure (3) est actionnée, en particulier exclusivement, au moyen du dispositif électronique (B) associé à la source de pression (2).

15. Procédé permettant de faire fonctionner un système de freinage selon l'une quelconque des revendications 1 à 14, **caractérisé en ce qu'**en cas de défaillance de la première source de pression (5), les premières vannes de roue (6a-6d) sont fermées et les deuxièmes vannes de roue (7a-7d) sont ouvertes, et la deuxième source de pression (2) est actionnée pour augmenter une pression.

16. Procédé selon la revendication 15 lorsqu'elle dépend de la revendication 11, **caractérisé en ce qu'**en cas de défaillance de la première source de pression (5), une régulation de glissement individuel par roue est effectuée, dans lequel une augmentation de la pression au niveau d'un des freins de roue est effectuée par l'ouverture de la première vanne de roue correspondante, dans lequel un fluide sous pression s'écoule par l'intermédiaire de la première source de pression (5) et d'une conduite de retour (26) jusqu'au réservoir de fluide sous pression (4).

17. Procédé permettant de faire fonctionner un système de freinage selon la revendication 6 ou l'une des revendications 7 à 14 lorsqu'elles dépendent de la revendication 6, **caractérisé en ce qu'**en cas de défaillance du premier dispositif électronique (A), le deuxième dispositif électronique (B) permet de fermer les premières vannes de roue (6a-6d) et d'ouvrir les deuxièmes vannes de roue (7a-7d) et d'actionner la deuxième source de pression (2) pour augmenter une pression.
